Europäisches Patentamt

(19) European Patent Office

Office européen des brevets

(11) Publication number: **0 290 289**
A1

# EUROPEAN PATENT APPLICATION

(21) Application number: 88304153.5

(22) Date of filing: 06.05.88

(51) Int. Cl.⁴: **G 21 K 4/00**
C 09 K 11/02, C 09 K 11/85

(30) Priority: 06.05.87 US 46442   06.05.87 US 46443
22.10.87 US 111358   22.10.87 US 111359

(43) Date of publication of application:
09.11.88 Bulletin 88/45

(84) Designated Contracting States: DE FR GB NL

(71) Applicant: GENERAL ELECTRIC COMPANY
1, River Road
Schenectady New York 12345 (US)

(72) Inventor: Yeager, Gary William
206 Union Street
Schenectady New York 12305 (US)

Cusano, Dominic Anthony
2017 Morrow Avenue
Schenectady New York 12309 (US)

Loucks, George Raymond
95 Skyway Drive
Scotia New York 12302 (US)

Caraher, Joel Matthew
Box 563, Route 2
Delanson New York 12053 (US)

(74) Representative: Kennington, Eric Alasdair et al
London Patent Operation GENERAL ELECTRIC
TECHNICAL SERVICES CO. Burdett House 15-16
Buckingham Street
London WC2N 6DU (GB)

(54) Digital radiographic imaging system, method and converter medium therefor.

(57) A photostimulable x-ray converter member is disclosed for digital radiographic applications which comprises a composite of phosphor particles suspended in a matrix of a solid organic polymer having an optical refractive index closely matching the optical refractive index of the phosphor particles. Said composite phosphor medium further exhibits this refractive index match at the wavelength of the energy source employed to readout a latent radiographic image previously stored by X radiation in the phosphor. The particular phosphor material being employed is barium fluorohalide activated with europium ion whereas the preferred thetic organic polymer is a polysulfone exhibiting sufficient mechanical strength to form a self-supporting void-free composite with the suspended phosphor having a surface area of at least one-half square foot. A method to produce said composite x-ray image converter medium is also disclosed along with a digital radiographic imaging system and method employing said x-ray image converter medium. The barium fluorohalide phosphor may be modified with Group 1A and/or 3A impurity ions to improve further the refractive index match.

Fig. 2

Description

# DIGITAL RADIOGRAPHIC IMAGING SYSTEM, METHOD AND CONVERTER MEDIUM THEREFOR

## BACKGROUND OF THE INVENTION

Various type x-ray image converters utiliizing photostimulable luminescent materials have long been known such as radiographic intensifier screens, fluoroscopic screens, and x-ray image intensifier tubes. For example, in U.S. Patent No. 3,617,743, assigned to the assignee of the present invention, there is disclosed lanthanum and gadolinium oxyhalide luminescent materials activated with terbium which exhibit superior conversion efficiency when employed to convert x-rays impinging on said phosphor medium to visible light. X-rays from a suitable x-ray source which pass through an object and impinge upon said phosphor medium form an immediate first light image which can be recorded on photographic film as well as produce a radiographic latent image which remains in said phosphor medium unless thereafter recalled by a suitable energy source to produce a second light image by thermoluminescent response. To further illustrate the nature of said latter phosphor behavior, there is disclosed in U.S. Patent No. 3,996,472, also assigned to the present assignee, various rare earth oxyhalides co-activated with terbium and a second activator selected from zirconium and hafnium exhibiting superior thermoluminescent behavior in radiation dosimeters when subjected to heat stimulation. In more recently issued U.S. Patent Nos. 4,346,295 and 4,356,398 there is disclosed laser means emitting light as a source of stimulating energy which produces the same type thermoluminescent response in various phosphor materials. A helium-neon laser is therein disclosed as the energy stimulation source for said purpose. Such a method of exciting the phosphor materials has been termed "photostimulation" wherein the energy from optical photons (ultraviolet, visible or infrared radiation) is said to stimulate the emptying of stored energy to produce light emission of the type termed "photostimulated luminescence" as distinct from "thermostimulated luminescent" which is produced by heating. Accordingly, the energy source of electromagnetic radiation hereinafter mentioned in describing the present invention as a means for producing said photostimulated luminescent response in the phosphor medium herein being employed means ultraviolet, visible or infrared radiation.

X-ray image converters employing a conventional photostimulable phosphor medium still experience major problems with the optical image formed when retrieving the latent radiographic image from the phosphor medium. Said conventional phosphor medium is generally in the form of a porous layer of the phosphor particles bonded to a supporting substrate and with the void spaces between the individual phosphor particles causing some failure to retrieve all of the stored information as well as some loss of the emerging optical radiation. A partial solution to this problem is disclosed in U.S. Patent No. 4,375,423, also assigned to the present assignee, wherein the phosphor particles are embedded or suspended in an optically transparent matrix which is selected or adjusted to have an index of refraction which is approximately equal to that of the phosphor embedded therein at the wavelength of light being emitted by the phosphor. This improvement enables more of the visible radiation being generated when the phosphor converts the impinging x-rays and forms an immediate first light image to escape from said medium. Spatial resolution for said immediate first light image is primarily determined by whatever spreading or scattering of the emitted light takes place in the phosphor medium. In accordance with said improvement, phosphor particles of europium activated barium fluorochloride are embedded in a matrix of synthetic organic polymer such as the polymerization product of 2-vinyl naphthalene and vinyl toluene to provide superior optical coupling to photoelectrically responsive devices. There is further disclosed in said improvement various methods to manufacture such index-matching phosphor medium for use in x-ray image converter devices suitable for various digital radiographic imaging equipment.

As distinct from said above described radiographic imaging systems wherein the entire visual image is displayed at one time, a digital radiographic imaging system may employ a moving beam of electromagnetic radiation to retrieve the latent radiographic image stored in said phosphor medium. Minimal spreading of said photostimulation energy as the moving energy beam penetrates the phosphor medium is important to permit the latent image to be readout or recalled with higher resolution for a given thickness of said medium. Accordingly, resolution loss for the recalled visual image is experienced if the photostimulation energy becomes scattered within the phosphor medium beyond the specific lateral area being read at a particular time interval. Accurate retrieval of the stored information in such a system understandably further requires that all phosphor particles be accessed within the specific lateral area being read at said time interval. This does not occur in the prior art x-ray screens due to excessive lateral light scattering which permits only shallow penetration of the phosphor medium by the photostimulation energy. Improved recovery of the latent radiographic image in this manner thereby dictates minimal scattering of the photostimulation energy as distinct from that light or emission subsequently generated by the phosphor. Scattering of the visible or ultraviolet radiation produced when said photostimulation energy is selectively absorbed by the information containing phosphor particles is of lesser importance in the this type of digital radiographic imaging system. Known photodetection means employed in said type systems are designed to collect all emerging radiation despite being scattered within the phosphor medium.

There also remains a need for larger size x-ray image converter construction of this type. For example, digital radiographic systems are needed to scan relatively large areas of a patient such as employed for a chest diagnosis and which can exceed an area of one-half square foot or greater. To meet such larger area requirements, the index-matching matrix in which the phosphor particles are distributed should provide a self-supporting composite medium. To do so not only requires that the matrix constituent of said composite medium exhibit sufficient mechanical strength but also that the selected phosphor material be capable of forming a stable and uniform dispersion in said matrix constituent. It becomes especially important in the latter regard that a substantially void-free suspension of said phosphor particles result in order to preserve the desired optical improvement.

For still other reasons, it is preferable that a relatively large proportion of the index-matching medium be occupied by the phosphor constituent. Absorption for most of the impinging X radiation is desirable in the composite x-ray converter medium so that an accurate radiographic image therein is stored which dictates that sufficient phosphor be employed to achieve the desired degree of absorption. Accordingly, the phosphor and matrix constituents in the composite medium should preferably be sufficiently compatible so that phosphor loadings can be achieved wherein the phosphor particles occupy a minimum weight fraction in said medium of at least 20-25%. Increasing the relative weight proportion of phosphor in the composite medium can also reduce absorption by the matrix constituent of the photostimulation energy being employed to recall the latent radiographic image previously stored in said composite medium. Since it is further desirable in said retrieval steps to access all the embedded phosphor particles which may contain the x-ray stored information, any undue absorption of the electromagnetic energy producing such retrieval by the matrix constituent can effectively prevent an accurate retrieval.

## SUMMARY OF THE INVENTION

A novel photostimulable x-ray converter medium has now been developed to form a more accurate optical image upon retrieving a latent radiographic image stored within said medium.

In one aspect of the invention, said photostimulable x-ray image converter medium for digital radiography comprises a composite of phosphor particles suspended in a matrix of a solid synthetic organic polymer having an optical refractive index closely matching the optical refractive index of said phosphor, said phosphor medium being barium fluorochloride activated with europium ion, and said synthetic organic polymer being a polysulfone exhibiting sufficient mechanical strength to form a self-supporting void-free composite with the suspended phosphor having a surface area of at least one half square foot.

In another aspect of the invention, said photostimulable x-ray image converter medium for digital radiography comprises a composite of modified phosphor particles suspended in a matrix of a solid synthetic organic polymer having an optical refractive index closely matching the optical refractive index of said phosphor, said modified phosphor comprising crystals of barium fluorohalide activated with europium ion which further contain a level of an impurity ion selected from Group 1A and 3A elements in the periodic table of elements to reduce the optical refractive index of said phosphor.

To achieve the aforementioned objective, however, the optical refractive index match in the present composite phosphor medium should take place at the wavelength of the energy source being employed to recall said latent radiographic image. Said composite medium can be employed as a layer configuration in a digital radiographic imaging system which further includes an x-ray source to expose said x-ray image converter medium to x-rays passing through an object in order to record a latent radiographic image in said medium, an energy source to recall said radiographic latent image as an optical image thereof, photodetection means optically coupled with said x-ray image converter medium to read the optical image and means for digital recording of said optical image.

In the preferred embodiments, the phosphor portion in said x-ray image converter medium occupies a minimum weight fraction in said medium of at least 50% while the source of electromagnetic radiation stimulating the phosphor is a laser beam. To still further illustrate the index-matching characteristics for a representative composite converter medium in said type improved digital radiographic imaging equipment, a typical unmodified barium fluorochloride phosphor exhibits an optical refractive index of approximately 1.654 at a wavelength of 633 nanometers whereas a suitable polysulfone homopolymer exhibits an optical refractive index at said wavelength of 1.633. Said index match can be improved further by modifying the phosphor with said Group 1A and/or 3A impurity ions, to provide a phosphor refractive index substantially the same as the said 1.633 polysulfone homopolymer index. Operation of said improved digital radiographic imaging system can employ a movable helium-neon laser emitting at a wavelength in the range of approximately 630-633 nanometers to provide the recall excitation energy and with ultraviolet sensitive photodetector devices being employed to collect the phosphor emission caused by said excitation.

The employment of a composite phosphor medium exhibiting an optical refractive index matched at the wavelength of the recalling energy source for deeper penetration provides important further related advantages. It becomes thereby possible to employ a phosphor medium having a greater thickness for better stoppage of the X radiation which forms the latent radiographic image in said medium. As a result, thicker x-ray image converters can now be utilized to absorb 60-70% of the impinging X radiation for a more accurate image formation as distinct from the conventional members which are made thinner to better enable retrieval of the stored latent image. The higher degree of resolution achieved for a given screen thickness in embodiments of the present invention than is obtained in prior art x-ray screens understandably provides the same resolution using said much thicker screens. A greater x-ray absorption provided in said manner is understandably further beneficial in reducing patient exposure to the x-ray dosage.

Preferred phosphor compositions according to the present invention employ a level of europium activator ion in the barium fluorochloride phosphor in the approximate range 0.1 - 2 weight percent. Other suitable phosphors of this type are known, however, to include partial substitution for the barium ion in the phosphor matrix with other metal ions as well as substitution of other halide ions for the chloride ion. In the latter regard, partial or complete substitution of bromide ion for the chloride ion in said phosphor is further deemed possible. Correspondingly, the europium activator level can be varied both below and above the preferred range given above and co-activation of the phosphor is also contemplated with still further modification of the europium activator level especially with regard to exercising a desirable control of the phosphor emission characteristics such as afterglow.

Modification of the europium activated barium fluorohalide phosphor constituent in the x-ray converter medium, if desired, to more closely match the optical refractive index of the selected polymer matrix constituent can be achieved in a simple and direct manner. For example, a typical barium fluorochloride phosphor containing europium activator levels in the approximate range 0.1 - 2.0 weight percent based on the weight of said phosphor can be doped with halide compounds of the aforementioned index reducing elements including sodium, potassium, rubidium, cesium, aluminum, gallium, boron, and indium to produce the desired modifications at 0.3 - 3.0 weight percent level of these impurity elements. To still further illustrate a suitable method for said phosphor modification, the phosphor crystals are first contacted with a liquid solution of said impurity ion compound and the solvent thereafter removed therefrom to form a solid mixture, with said solid physical mixture being subsequently heated to cause the impurity ion to selectively diffuse into the phosphor matrix and form a solid solution therein. The heating of said solid mixture is preferably first carried out under non-oxidising atmospheric conditions and followed by reheating under oxidizing conditions. In the foregoing manner, said representative phosphor composition can be doped with an aqueous sodium bromide solution and after the solvent evaporation, the dried phosphor heated in hydrogen gas at approximately 800°C for several hours to incorporate the sodium ion in said phosphor matrix. Refiring of said phosphor for about one-half hour in air at 750°C restores said modified phosphor to an unreduced condition with an optical refractive index now measuring approximately 1.633. A like result can also be produced upon incorporating approximately 1.5 weight percent aluminum ion in said phosphor matrix.

Preferred polymers for selection or preparation to form the matrix constituent in the presently proposed composite x-ray converter medium exhibit an optical refractive index closely matching that of the above modified phosphor constituent as above disclosed while also being transparent to the optical radiation being emitted by said phosphor. Accordingly, the optical refractive index of said polymer must generally reside within a general range 1.59 - 1.69, as measured at the wavelength of recall excitation energy, for some degree of the desired optical improvement to be realized and with optimum improvement being achieved with the aforementioned preferred barium fluorochloride phosphor at a polymer refractive index residing in the range 1.65 - 1.67. The selected or prepared polymer should additionally exhibit thermoplastic behavior in order to allow preparation of the presently proposed composite medium by a melt-mixing of the individual phosphor and the polymer constituents in a manner more fully described hereinafter. A variety of thermoplastic homopolymers and copolymers having all of the foregoing requisite characteristics are already known. For example, it has already been reported that the presence of various aromatic groups in a polymer chain can elevate the polymer refractive index as does bromide, sulfone, and ketone moieties. To still further illustrate such effect, aromatic polycarbonates formed with 4, 4′ dihydroxydiphenyl-1, 1-ethane exhibit a 1.5937 refractive index whereas polymers formed with 4, 4′ dihydroxytriphenyl-2, 2, 2-ethane exhibit a 1.613 refractive index. Still other known polymeric materials to be considered as having the following reported optical refractive indices including polystyrene having $N_d = 1.59$-1.592, poly (o-methoxystyrene) having $N_d = 1.5932$, poly (vinylidene chloride) having $N_d = 1.60$-1.63, poly (pentachlorophenyl methacrylate) having $N_d = 1.608$, poly (phenyl$\alpha$-bromoacrylate) having $N_d = 1.612$, poly (2,6 dichlorostyrene) having $N_d = 1.6248$, poly (sulfone) having $N_d = 1.633$, and poly ($\alpha$-naphthyl methacrylate) having $N_d = 1.6410$.

Suitable preferred polysulfone polymers to form the matrix constituent in the presently proposed composite x-ray converter medium are also known and commercially available. Known commercially available polymers are homopolymers such as that now being manufactured by the Union Carbide Corporation under the trade name "UDEL" as an optically transparent thermoplastic material for various end product applications. Other suitable polysulfone polymers include co-polymers of polysulfone with bis-phenol moieties such as bis-phenol A as well as other bis-phenols. To further illustrate such co-polymer preparation, there can be employed the co-polymerization product of 4, 4′ dichlorodiphenylsulfone, bis-phenol A, and another bis-phenol.

In a further aspect of the present invention, the basic digital radiographic imaging system utilizing the presently proposed photostimulable x-ray image converter medium comprises:

(a) an x-ray image converter member having a layer configuration with a surface area of at least one-half square foot and comprising a composite of phosphor particles suspended in a matrix of a solid synthetic organic polymer having an optical refractive index closely matching the optical refractive index of said phosphor, said phosphor being barium fluorochloride activated with europium ion, said synthetic organic polymer being a polysulfone exhibiting sufficient mechanical strength to form said composite member, and with said composite phosphor medium further exhibiting the optical refractive index match at the wavelength of stimulating electromagnetic radiation employed to recall a latent radiographic image previously stored by X radiation in said phosphor,

(b) an x-ray source to expose said x-ray image converter member to x-rays passing through an object and record a latent radiographic image in said member,

(c) a source of electromagnetic radiation to recall said radiographic latent image as an optical image thereof,

(d) photodetection means optically coupled with said x-ray image converter member to read the optical image, and

(e) means for digital recording of said optical image.

In a yet further aspect of the present invention, the basic digital radiographic imaging system utilizing the presently proposed photostimulable x-ray image converter medium comprises:

(a) an x-ray image converter member having a layer configuration with a surface area of at least one-half square foot and comprising a composite of modified phosphor particles suspended in a matrix of a solid synthetic organic polymer having an optical refractive index closely matching the optical refractive index of said phosphor, said modified phosphor comprising crystals of a europium activated barium fluorohalide further containing a sufficient level of an impurity ion selected from Group 1A and 3A elements in the periodic table of elements to reduce the optical refractive index of said phosphor, and with said composite phosphor medium further exhibiting the optical refractive index match at the wavelength of stimulating electromagnetic radiation employed to recall a latent radiographic image previously stored by X radiation in said phosphor,

(b) an x-ray source to expose said x-ray image converter member to x-rays passing through an object and record a latent radiographic image in said member,

(c) a source of electromagnetic radiation to recall said radiographic latent image as an optical image thereof,

(d) photodetection means optically coupled with said x-ray image converter member to read the optical image, and

(e) means for digital recording of said optical image.

In the preferred embodiments, digital computer means are employed for recording the recalled optical image formed by the x-ray image converter member and which can further include electronic signal processing circuitry to enhance the quality of the finally recorded radiographic image by various already known information processing techniques. Accordingly, the electronic analog signals generated by photodetection means in said preferred radiographic imaging systems are transmitted to digital image processing means in said preferred systems which can still further include a contemporaneous visual display operatively associated with the digital image processing means, such as a vidicon camera.

## BRIEF DESCRIPTION OF THE DRAWINGS

An embodiment of the present invention, given by way of non-limiting example, will now be described with reference to the accompanying drawings, in which:

FIG. 1 is a side elevation view depicting the formation of an optical image in a prior art x-ray image converter medium;

FIG. 2 is a side elevation depicting the formation of an optical image in an embodiment of the present invention, and

FIG. 3 is a schematic representation for a typical digital radiographic imaging system embodying the present invention.

## DETAILED DESCRIPTION OF THE PREFERRED EMBODIMENT

By way of example, the present embodiment is described with reference to the preferred fluorochloride phosphor and the preferred polysulfone polymer.

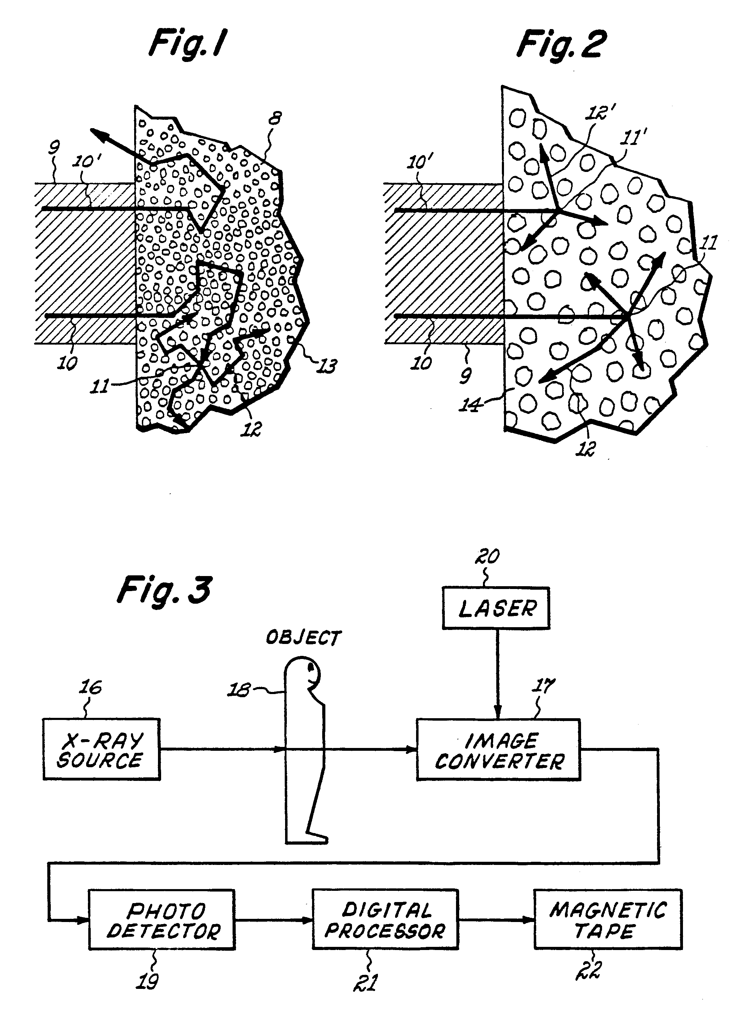

Referring to the drawings, FIG. 1 illustrates the retrieval of an optical image from a prior art x-ray image converter member having a latent radiographic image previously stored therein. As above indicated for an accurate recall of all stored information with a moving laser beam, said photostimulation energy should be primarily restricted to the lateral area being read at a particular time interval while further penetrating said entire medium at the readout location. It will therefore be apparent that any scattering of said input radiation beyond the width of said laser beam can effectively impair or preclude needed energy absorption by all information containing phosphor particles at the readout site. In this prior art form of porous phosphor medium 8, there is shown the light paths for a pair of representative infrared rays 10 and 10' forming a portion of the helium-neon laser beam 9 serving to recall the stored radiographic image. It can be noted from said illustration that first infrared ray 10 is caused to be scattered because of a difference in the index of refraction between the phosphor particles and any air or interstitial matter located between said phosphor particles before becoming absorbed at transition site 11. Since said transition site also resides beyond the width of a laser beam 9 there occurs an understandable loss of needed excitation energy at the readout location. Furthermore, the excessive scattering of said infrared ray in the phosphor medium before reaching said transition site 11 and which is further accompanied by scattering of the resultant lower energy optical photons 12 produced at said transition site represent other energy losses. The remaining illustrated infrared ray 10' is likewise excessively scattered in said porous phosphor medium to a greater degree whereby its tortuous light path becomes reversed with respect to the direction of said impinging laser beam and before said input photostimulation energy can reach a transition site containing additional stored information. It becomes thereby evident from such excessive scattering of the recalling energy that some resolution loss will be experienced in the present type readout procedure. It is further evident in said porous phosphor medium that only a shallow penetration by the recalling energy can be achieved with a resultant inaccurate retrieval of all stored information.

In contrast to the disadvantages being experienced with the above prior art converter medium, there is shown in FIG. 2 a side elevation view illustrating image retrieval in an index-matched converter medium 14 embodying to the present invention. Herein, said representative recall energy rays 10 and 10' both penetrate the void-free composite medium for absorption at transition sites 11 and 11' located within the lateral area being impinged by laser beam 9 and which reside at different levels within said lateral area. As can be noted in said illustration, the relative freedom from light scattering in the present composite medium now enables a complete readout of the latent radiographic image without experiencing loss of the recalling energy. Substantially all of said recall energy can now penetrate the entire phosphor medium at the readout site and be converted to optical photons 12 at substantially all transition sites. Here the resultant emerging light paths 12 and 12', respectively, can also be noted as relatively free of scattering and thereby less prone to causing defects in the recovered optical image. The additional presence of a transparent matrix material 14 in the present composite medium having an optical refractive index closely matched to the phosphor particles understandably contributes to said improved freedom from all light scattering in said conversion medium. Of greater significance to the superior performance being exhibited by the present composite phosphor medium, however, is the previously disclosed need for said index-match to occur at the wavelength of the photostimulation energy source being employed to recall the latent radiographic image stored in said medium. As a direct consequence of such index-matching characteristic in the present composite phosphor medium, said energy excitation rays now become absorbed rather than scattered at transition sites throughout the entire phosphor depth and with the converted optical radiation also being emitted more efficiently from said medium than occurs from the prior art phosphor medium hereinbefore employed in the present type digital radiographic imaging system.

To prepare a suitable composite x-ray image converter member embodying the present invention first requires dispersion of the selected phosphor particles in a matrix of the selected polymer. In doing so, with the preferred polysulfone polymer said phosphor particles should be properly dispersed in the molten thermoplastic which can be achieved with a suitable mixture of the individual solid constituents by various conventional means. Preferably, the preparation method comprises forming a solid physical mixture of a polysulfone polymer with particles of the europium activated barium fluorochloride phosphor, subjecting said mixture to sufficiently elevated temperature and pressure conditions whereby said polymer is melted and a substantially void-free suspension of said phosphor particles therein is formed, and cooling said molten phosphor suspension to ambient conditions whereby the solid converter is formed. In one such method of preparation, approximately 33 parts by weight polysulfone resin were dry blended with approximately 66 parts by weight of the phosphor and said dry blend thereafter melt mixed in a Brabender 3/4" single screw extruder at approximately 540° F. The resulting extrudate was quenched in a water bath and pelletized. Said dry pellet mixture was thereafter compression molded by conventional means to form a final self-supporting layer with the desired area dimensions and at a thickness of approximately 40 mils. For the compression molding of said final member when employing the above identified polysulfone homopolymer, molding temperatures in the approximate range 540°F to 750°F can be used whereas the applied pressures can be in the approximate range 700 to 2000 PSI. An alternative method of preparation can employ injection molding at the above indicated elevated temperature and pressure conditions of the solid physical mixture. Such employment of conventional injection molding technique permits the melt-mixing of the composite medium and forming the final layer configuration for said x-ray image converter member to be carried out in a single operation. A still further method of preparation for said composite member comprises dissolving the solid polysulfone polymer in an organic liquid solvent, thereafter dispersing particles of the selected phosphor in said solution, and subsequently removing the organic liquid solvent to form the solid powder mixture having said phosphor particles coated with said polymer. Final preparation of a self-supporting x-ray image converter member with said solid mixture can follow the preparatation steps already above specified. It is further contemplated in utilizing such mold ing of the final composite converter member to sequentially apply various heating and pressure conditions to the mold containing the solid powder mixture.

FIG. 3 depicts schematically a representative digital radiographic imaging system embodying to the present invention. Specifically, there is depicted in block diagram form a conventional x-ray source such as an x-ray tube 16 to first expose the present x-ray image converter member 17 to x-rays passing through an object 18 for recording a latent radiographic image in said medium. Photodetection means 19 which may comprise a conventional photomultiplier tube, photodiodes, or charge transfer devices including charge coupled devices and charge injection devices are optically coupled with said x-ray image converter member 17 to subsequently read the optical image upon photostimulation of the latent radiographic image stored in said medium. Said retrieval of the latent radiographic image contained in said converter member 17 is preferably achieved by scanning said x-ray image converter member 17 with laser means 20 which projects a scanning beam across the surface of said phosphor medium. The output signals from said photodetection means 19 provide an electronic reproduction of said retrieved optical image for further processing with high speed electronic computer 21 incorporating an image processing algorithm developed for said purpose. As previously indicated, said digital processing means 21 in the present radiographic system can also include additional signal processing means to further enhance the quality of said converted optical image. Said digitized optical image is finally recorded by known electronic recording means 22 such as a magnetic tape and which as further previously indicated can be further contemporaneously viewed as a reconverted visual image by other known electronic display means operatively associated with said recording means.

The preferred method of recording a digital radiographic image thereby comprises exposing a photostimulable x-ray converter member embodying the present invention to an x-ray source after passage through an object to record a latent radiographic image in said member, stimulating said x-ray image converter member with an energy source of electromagnetic radiation in an imagewise pattern to recall said latent radiographic image as an optical image thereof and directly recording said optical image by digital processing means. In accordance with said method, the latent radiographic image stored in the composite phosphor medium is converted to an electronic image by the operatively associated digital computer for processing and storage to produce an enhanced digitized image having improved visual characteristics. For the purpose of better achieving said latter objective it becomes desirable to capture all of the phosphor emission emerging from the present x-ray image converter medium. To do so can advise a co-operative physical relationship between the scaning photodetection means employed in the present radiographic imaging system and the x-ray image converter component whereby all or most of said emerging radiation will be detected.

It will be apparent from the foregoing description that a broadly useful improved photostimulable x-ray image converter medium has been disclosed for digital radiography enabling superior information retrieval. It will be apparent from the said foregoing description, however, that various modifications in the specific embodiments above described can be made without departing from the scope of the present invention. For example, certain minor modifications in the composition of the present phosphor and polymer materials being employed is possible without experiencing a total loss of the improved optical response. Additionally, still other physical configurations of the presently improved digital radiographic imaging system than above specifically disclosed are possible to make still better use of the disclosed composite x-ray image converter medium.

## Claims

1. A photostimulable x-ray image converter medium for digital radiography which comprises a composite of phosphor particles suspended in a matrix of a solid synthetic organic polymer having an optical refractive index closely matching the optical refractive index of said phosphor, said phosphor being barium fluorohalide activated with europium ion, said synthetic organic polymer being a polysulfone exhibiting sufficient mechanical strength to form a self-supporting void-free composite with the suspended phosphor having a surface area of at least one-half square foot, and said composite phosphor medium further exhibiting the optical refractive index match at a wavelength of stimulating electromagnetic radiation employable to recall a latent radiographic image previously stored by X radiation in said phosphor.

2. An x-ray image converter medium as in Claim 1 wherein the barium fluorohalide phosphor exhibits an optical refractive index of approximately 1.654 at a wavelength of 633 nanometers whereas the polysulfone polymer exhibits an optical refractive index at said wavelength of approximately 1.633.

3. A photostimulable x-ray image converter medium for digital radiography which comprises a composite of modified phosphor particles suspended in a matrix of a solid synthetic organic polymer having an optical refractive index closely matching the optical refractive index of said phosphor, said modified phosphor comprising crystals of a europium activated barium fluorohalide further containing a sufficient level of an impurity ion selected from Group 1A and 3A elements in the periodic table of elements to reduce the optical refractive index of said phosphor, and said composite phosphor medium further exhibiting the optical refractive index match at a wavelength of stimulating electromagnetic radiation employable to recall a latent radiographic image previously stored by X radiation in said phosphor.

4. An x-ray image converter medium as in Claim 3 wherein said synthetic organic polymer is a polysulfone exhibiting sufficient mechanical strength to form a self-supporting void-free composite with the suspended phosphor having a surface area of at least one-half square foot.

5. An x-ray image converter medium as in Claim 3 or Claim 4 wherein the level of impurity ion is in the approximate range from 0.3 - 3.0 weight percent based on the weight of said phosphor.

6. An x-ray image converter medium as in any one of the preceding claims wherein the phosphor is europium activated barium fluorochloride.

7. An x-ray image converter medium as in Claim 6 wherein the level of europium activator ion in the barium fluorochloride phosphor is in the approximate range 0.1 - 2.0 weight percent.

8. An x-ray image converter medium as in any one of the preceding claims having a layer configuration and wherein the phosphor particles occupy a minimum weight fraction in said medium of at least 50%.

9. An x-ray image converter medium as in any one of the preceding claims having a weight ratio of phosphor to polymer of approximately 2:1.

10. An x-ray image converter medium as in any one of the preceding claims wherein the polymer is a polysulfone homopolymer.

11. An x-ray image converter medium as in any one of the preceding claims wherein the source of electromagnetic radiation stimulating the phosphor is a laser beam.

12. A digital radiographic imaging system for digital radiography which includes:

(a) a layer-like x-ray image converter member with a surface area of at least one-half square foot and comprising a composite of phosphor particles suspended in a matrix of a solid synthetic organic polymer having an optical refractive index closely matching the optical refractive index of said phosphor, said phosphor being barium fluorohalide activated with europium ion, said synthetic organic polymer being a polysulfone exhibiting sufficient mechanical strength to form said composite member, and with said composite phosphor medium further exhibiting the optical refractive index match at the wavelength of stimulating electromagnetic radiation employed to recall a latent radiographic image previously stored by X radiation in said phosphor,

(b) an x-ray source to expose said x-ray image converter member to x-rays passing through an object and record a latent radiographic image in said member,

(c) a source of electromagnetic radiation to recall said radiographic latent image as an optical image thereof,

(d) photodetection means optically coupled with said x-ray image converter member to read the optical image, and

(e) means for digital recording of said optical image.

13. A radiographic imaging system for digital radiography which includes:

(a) a layer-like x-ray image converter member with a surface area of at least one-half square foot which comprises a composite of modified phosphor particles suspended in a matrix of a solid synthetic organic polymer having an optical refractive index closely matching the optical refractive index of said phosphor, said modified phosphor comprising crystals of a europium activated barium fluorohalide further containing a sufficient level of an impurity ion selected from Group 1A and 3A elements in the periodic table of elements to reduce the optical refractive index of said phosphor, and with said composite phosphor medium further exhibiting the optical refractive index match at the wavelength of stimulating electromagnetic radiation employed to recall a latent radiographic image previously stored by X radiation in said phosphor,

(b) an x-ray source to expose said x-ray image converter member to x-rays passing through an object and record a latent radiographic image in said member,

(c) a source of electromagnetic radiation to recall said latent radiographic image as an optical image thereof,

(d) photodetection means optically coupled with said x-ray image converter member to read the optical image, and

(e) means for digital recording of said optical image.

14. A digital radiographic imaging system as in Claim 12 or Claim 13 which further includes digital processing means to enhance the quality of said optical image.

15. A digital radiographic imaging system as in any one of Claims 12 to 14 wherein the energy source recalling the latent radiographic image comprises optical laser means.

16. A digital radiographic imaging system as in any one of Claims 12 to 15 wherein the photodetection means to read the optical images comprises a photomultiplier device.

17. A digital radiographic imaging system as in any one of Claims 12 to 15 wherein the photodetection means to read the optical image comprises a charge transfer device.

18. A digital radiographic imaging system as in Claim 17 wherein said charge transfer device is a charge coupled device.

19. A method of forming photostimulable x-ray image converter member for digital radiography which comprises:

(a) forming a solid physical mixture of a thermoplastic synthetic organic polymer with particles of a europium activated barium fluorohalide phosphor;

(b) subjecting said mixture to sufficiently elevated temperature and pressure conditions whereby said polymer is melted and a substantially void-free suspension of said phosphor particles therein is formed; and

(c) cooling said molten phosphor suspension to ambient conditions whereby a solid converter member is formed.

20. A method as in Claim 19 wherein the mixture is initially formed by suspending the phosphor particles in a liquid solution of the polymer and the solvent in said solution thereafter removed to form a solid mixture having said phosphor particles coated with said polymer.

21. A method as in Claim 19 or Claim 20 wherein the solid converter member is formed in a mold with said mixture.

22. A method as in any one of Claims 19 to 21 in which said phosphor particles are formed by:

(i) forming an initial solid physical mixture with crystals of a europium activated barium fluorohalide phosphor and a sufficient amount of a chemical compound containing an impurity ion selected from Group 1A and 3A elements in the periodic table of elements to reduce the optical refractive index of said phosphor; and

(ii) heating said initial solid physical mixture causing the impurity ion to selectively diffuse in the phosphor mixture,

and in which said thermoplastic synthetic organic polymer has an optical refractive index closely matching the optical refractive index of the treated phosphor crystals.

23. A method as in Claim 22 wherein said initial solid physical mixture is formed by contacting the phosphor crystals with a liquid solution of said impurity ion compound and the solvent in said solution thereafter removed to provide a solid admixture.

24. A method as in Claim 22 or Claim 23 wherein the heating of said initial solid physical mixture is carried out under non-oxidizing conditions and followed by reheating under oxidizing conditions.

25. A method as in any one of Claims 19 to 24 in which said polymer is a polysulfone.

26. A method of forming a photostimulable x-ray image converter member for digital radiography which comprises:

(a) dissolving a polysulfone polymer in an organic liquid solvent,

(b) dispersing particles of a europium activated barium fluorohalide phosphor in said solution,

(c) removing said organic liquid solvent to form a solid physical mixture having said phosphor particles coated with said polymer,

(d) heating said mixture at sufficiently elevated temperature and pressure conditions in a mold whereby said polymer coating is melted and a substantially void-free suspension of said phosphor particles is formed, and

(e) cooling said mold to ambient conditions whereby a solid converter member having said mold configuration is formed.

27. A method as in Claim 26 wherein the heating and pressure conditions are sequentially applied to the mold containing the solid mixture.

28. A method as in Claim 27 wherein the solid mixture is placed in a preheated mold, pressure applied to said mixture filled mold with heating, and additional pressure applied to said mold with cooling to form the final solid converter member.

29. A method as in any one of Claims 26 to 28 wherein the elevated temperatures are in the approximate range 540°F to 750°F whereas the applied pressures are in the approximate range 700 to 2000 pounds per square inch.

30. A method as in any one of Claims 26 to 29 in which said phosphor particles are formed by:

(i) forming an initial solid physical mixture with crystals of a europium activated barium fluorochloride phosphor and a sufficient amount of a chemical compound containing an impurity ion selected from Group 1A and 3A elements in the periodic table of elements to reduce the optical refractive index of said phosphor; and

(ii) heating said initial solid physical mixture causing the impurity ion to selectively diffuse into the phosphor matrix.

31. A method of recording a digital radiographic image which comprises:

(a) exposing a photostimulable x-ray image converter member to an x-ray source after passage through an object to record a latent radiographic image in said member,

(b) said x-ray image converter member being aligned with said x-ray source and being layer-like with a surface area of at least one-half square foot and comprising a composite of phosphor particles suspended in a matrix of a solid synthetic organic polymer having an optical refractive index closely matching the optical refractive index of said phosphor, said phosphor being barium fluorohalide activated with europium ion, said synthetic organic polymer being a polysulfone exhibiting sufficient mechanical strength to form said composite member, and with said composite phosphor medium further exhibiting the optical refractive index match at the wavelength of stimulating electromagnetic radiation employed to recall a latent radiographic image previously stored by X radiation in said phosphor,

(c) stimulating said x-ray image converter member with said energy source of electromagnetic radiation in an imagewise pattern to recall said latent radiographic image as an optical image thereof, and

(d) directly recording said optical image by digital processing means.

32. A method of recording a digital radiographic image which comprises:

(a) exposing a photostimulable x-ray image converter member to an x-ray source after passage through an object to record a latent radiographic image in said member,

(b) said x-ray image converter member being aligned with said x-ray source and comprising a composite of modified phosphor particles suspended in a matrix of a solid synthetic organic polymer having an optical refractive index closely matching the optical refractive index of said phosphor, said modified phosphor comprising crystals of a europium activated barium fluorohalide further containing a sufficient level of an impurity ion selected from Group 1A and 3A elements in the periodic table of elements to reduce the optical refractive index of said phosphor, and with said composite phosphor medium further exhibiting the optical refractive index match at the wavelength of stimulating electromagnetic radiation employed to recall a latent radiographic image previously stored by X radiation in said phosphor,

(c) stimulating said x-ray image converter member with said energy source of electromagnetic radiation in an imagewise pattern to recall said latent radiographic image as an optical image thereof, and

(d) directly recording said optical image by digital processing means.

33. A method as in Claim 31 or Claim 32 which further includes digital processing to enhance the quality of said optical image.

34. A method as in any one of Claims 31 to 33 wherein the energy source recalling the latent radiographic image comprises a laser beam.

35. A method as in any one of Claims 31 to 34 wherein photodetection means are employed to read the optical image.

36. A method as in any one of Claims 31 to 34 wherein the optical image is read with charge transfer means.

0290289

*Fig.1*

*Fig.2*

*Fig.3*

OBJECT

20
LASER

16
X-RAY SOURCE

18

17
IMAGE CONVERTER

PHOTO DETECTOR

DIGITAL PROCESSOR

MAGNETIC TAPE

19

21

22

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-2 142 646 (EASTMAN KODAK) * Whole document * | 1-3,6,8,19,20 | G 21 K 4/00 C 09 K 11/02 C 09 K 11/85 |
| X | US-A-4 316 817 (G.E.C.) * Whole document * | 1-3,6,8,12,19,20 | |

TECHNICAL FIELDS SEARCHED (Int. Cl.4)

G 21 K
C 09 K

The present search report has been drawn up for all claims

| Place of search | Date of completion of the search | Examiner |
|---|---|---|
| THE HAGUE | 28-07-1988 | DROUOT M.C. |

EPO FORM 1503 03.82 (P0401)